# EUROPEAN PATENT SPECIFICATION

(11) **EP 1 710 267 B1**
(45) Date of publication and mention of the grant of the patent: **20.06.2007**
(21) Application number: 06006691.7
(22) Date of filing: 30.03.2006
(51) Int. Cl.: C08G 65/00, C08G 65/326

(54) **Fluorinated lubricants resistant to lewis acids**
Lewis Säure resistente fluorinierte Schmiermittel
Compositions lubrifiantes résistantes aux acides de lewis

(30) Priority: 07.04.2005 IT MI20050583
(43) Date of publication of application: 11.10.2006
(73) Proprietor: Solvay Solexis S.p.A., 20121 Milano (IT)
(72) Inventor: Di Meo, Antonella, 21042 Caronno Pertusella Varese (IT); Tonelli, Claudio, 20099 Sesto S. Giovanni Milano (IT)
(74) Representative: Sama, Daniele

(56) References cited:
- EP-A- 0 435 062
- EP-A- 0 539 742

## Description

The present invention relates to fluorinated lubricants having a good resistance to Lewis acids and thermooxidation combined with a high viscosity index, that is with a low viscosity variation with the increase of temperature.

In particular the invention relates to fluorinated lubricants, oils and greases, formed of oligomeric compounds having a perfluoropolyether structure comprising sulphur atoms in the chain and having -SH end groups, with viscosity indexes higher than 300.

Fluorinated lubricating oils having a high thermal stability formed of perfluoropolyethers having perfluoroalkyl end groups are commercially known. Said oils are marketed by SOLVAY SOLEXIS with the name Fomblin®. These lubricants are marketed in "grades" having molecular weights and viscosity suitable to the specific use as oils. The number average molecular weights of these commercial grades range from 4,000 to 13,000 and their viscosity index ranges from 300 to 360.

There are also fluorinated lubricants having a molecular weight lower than 4,000 and having a viscosity index in the range 60-100: this low viscosity index hinders the use of these lubricants in those applictions where a substantially constant viscosity is required as the temperature varies so as to guarantee an alwais effective lubrication.

All the different grades of the perfluoropolyether oils are generally obtained by fractionation or chemical treatments of peroxidic perfluoropolyethers. See for example USP 4,178,465. However the perfluoropolyether oils having a high molecular weight, higher than 10,000, particularly suitable in extreme lubrication conditions (high temperature and pressure), are hardly obtainable from the industrial point of view with the above mentioned processes. As a matter of fact the obtainment of these specific molecular weights and therefore of specific viscosities, requires several and expensive fractionation or purification steps, as the obtainment of said perfluoropolyether oils takes place by distillation of the polymerization raw products. Furthermore, even by using a fractionation process, perfluoropolyether oils having a number average molecular weight higher than 13,000 cannot be industrially prepared, as these fractions are present in the polymerization raw product in low amounts.

Besides, the above described and commercially available fluorinated lubricating oils have the drawback to have a poor resistance to Lewis acids and in general to thermooxidation in the presence of metals.

It is indeed known that the Lewis acids, such as aluminum, iron, titanium, vanadium oxides or fluorides and others, are catalysts of the perfluoropolyether degradation reactions, which can cause the complete lubricant decomposition. The applications where lubricants come into contact with Lewis acids, are for example the lubrication of magnetic disks or the lubrication of metallic parts in thermooxidative environment. In the former case the Lewis acid is one of the constituents of the disk material; in thermooxidative environment the Lewis acid forms in the lubricant utilization conditions.

To confer to perfluoropolyether oils resistance to Lewis acids and to thermooxidation, it is necessary to add thereto specific stabilizing additives. However the choice of said additives is not easy as the additives usually used in hydrocarbon or mineral lubricating oils are not soluble in perfluoropolyether oils. This makes necessary to synthetize specific additives for the various grades so as to guarantee a good solubility. Furthermore the use of specific additives can result in an increase of costs.

USP 5,376,289 in the name of the Applicant describes compounds formed of monofunctional perfluoropolyethers having one -SH end group used as lubricants or as anticorrosion additives for perfluoropolyether oils. The Examples reported in said patent only relate to their use as additives in perfluoropolyether oils. The use of said products as lubricating oils has not found a commercial development. As a matter of fact, tests carried out by the Applicant have shown that, by starting from the perfluoropolyether precursors described in the examples which are industrially available only with a number average molecular weight lower than 2,000, preferably lower than 1,000, it is possible to obtain perfluoropolyether oils having a number average molecular weight substantially lower than 2,000.

However the compounds having a molecular weight lower than 2,000 are not usable as lubricating oils for wide temperature ranges as they have a low viscosity index and a high vapour pressure, which, compromising, as said, their use in the lubrication at high temperatures. Besides, the obtainment of molecular weights higher than 2,000 requires the use of very complicated and therefore expensive industrial processes, which make said products little attractive from the commercial point of view.

The need was felt to have available fluorinated lubricants having a high viscosity index, higher than 300, a a high molecular weight combined with a good resistance to Lewis acids and thermooxidation, even in the presence of metals. Furthermore the need was felt to have available said fluorinated lubricants with a simple process allowing to easily obtain also high molecular weights, in particular higher than 13,000.

It has been surprisingly and unexpectedly found particular (per) fluoropolyethers satisfying the above requirements.

An object of the present invention are (per)fluoropolyethers having formula:

HS-(Y-R'f-Y'-S-Y-Rf-Y'S)ₙ-H (1)

wherein
- the Rf, R'f chains are perfluoropolyoxyalkylene chains, equal to or different from each other, formed of one or more repeating units, statistically placed along the chain, having the following structures:
   (CFXO), (CF₂CF₂O), (C₃F₆O), (CF₂(CF₂)_{z},O) wherein z' is an integer equal to 2 or 3,
   (CR₄R₅CF₂CF₂O), wherein X = F, CF₃; R₄ and R₅, equal to or different from each other, are selected from H, Cl, or perfluoroalkyl from 1 to 4 carbon atoms, said Rf, R'f having a number average molecular weight in the range
   500-10,000, preferably 800-3,000;
- Y and Y' are equal to or different from each other and are selected from -CF₂CH₂-, -CF(CF₃)CH₂-,
   - CFXCH₂(OCH₂CH₂)_{z}- wherein z ranges from 1 to 4 and X is as above,
   - CF₂CH₂O (CH₂)₃-, -CF (CF₃) CH₂O (CH₂)₃-;
- n is a positive integer higher than or equal to 1 selected so as to have a number average moelcular weight of the compound (1) in the range 3,000-50,000.

The preferred perfluoropolyether Rf, R'f chains are selected from the following structures:
(A) -O-(CF₂CF(CF₃)O)ₐ(CFXO)_{b}-CF₂(Ra_{f})CF₂-O-(CF₂CF (CF₃)O)ₐ(CFXO)_{b}-wherein X is F or CF₃; a and b are integers such that the number average molecular weight is in the above range; a/b is between 10 and 100, b being different from 0; Ra_{f} is a fluoroalkylene group from 1 to 4 C atoms;
(B) -O-(CF₂CF₂O)_{c} (CF₂O)_{d} (CF₂(CF₂)_{z},O)ₕ-
   wherein c, d and h are integers such that the number average molecular weight is in the above range; c/d is between 0.1 and 10, d being different from 0; h/(c+d) is between 0 and 0.05, (c+d) being different from 0; z' is 2 or 3; h can also be equal to 0;
(C) -O-(C₃F₆O)ₑ(CF₂CF₂O)_{f}(CFXO)_{g}-
   wherein X is F or CF₃; e, f, g are integers such that the number average molecular weight is in the above range; e/ (f+g) is between 0.1 and 10, (f+g) being different from 0; f/g is between 2 and 10, g being different from 0; (C₃F₆O) can represent units of formula - (CF₂CF(CF₃)O) or -(CF(CF₃)(CF₂O)-;
(D) -O-(CF₂(CF₂)ₙ,O)ₛ-
   wherein s is an integer such as to give the above molecular weight; z' has the already defined meaning;
(E) -O- (CR₄R₅CF₂CF₂O)_{j'} - or

   - (CR₄R₅CF₂CF₂O)_{p'} -Ra_{f}-O- (CR₄R₅CF₂CF₂O)_{q'}-

   wherein R₄ and R₅ are equal to or different from each other and selected from H, Cl or perfluoroalkyl from 1 to 4 C atoms; Ra_{f} is a fluoroalkylene group from 1 to 4 C atoms; j', p' and q' are integers such as to have a molecular weight as the above mentioned one;
(F) -O-(CF(CF₃) CF₂O)_{j"}-Ra'_{f}-O- (CF(CF₃)CF₂O)_{j"}-
   j" being an integer such as to give the above molecular weight; Ra'_{f} is a fluoroalkylene group from 1 to 4 C atoms.

Particularly preferred structures are (A) and (B).

The (per)fluoropolyethers of formula (1) of the present invention show a very good combination of physical properties making them particularly suitable as lubricants. As a matter of fact it has been found that the viscosity index is surprisingly high, in particular higher than 300, the vapour pressure extremely low, preferably lower than 10⁻⁹ Pa.

It has been surprisingly and unexpectedly found by the Applicant that the compounds of formula (1) show a high thermal stability, higher than 200°C, a high chemical stability towards particularly aggressive agents for perfluoropolyethers as Lewis acids, or metals in the presence of oxygen.

The lubricants of the present invention are therefore usable as oils or as components in the preparation of greases.

When the compounds of formula (1) are used as oils at high temperatures and pressures, molecular weights higher than 8,000, preferably higher than 10,000, more preferably higher than 13,000 are preferably used. It has indeed been found that the higher the lubricant molecular weight the higher the lubrication film homogeneity, even under extreme conditions.

The oils of formula (1) can furthermore contain the additives commonly used in lubrication as, for example, anti-rust, antioxidant, or anti-wear additives.

The lubricating oils can also be used for preparing fluorinated greases. In this case the lubricating compositions comprise, in addition to the perfluoropolyether oil, as an essential component, a thickener (in the known amounts of the prior art), as, for example, PTFE (polytetrafluoroethylene), sodium terephthalamate, calcium or lithium soaps, polyurea, etc. Greases with different penetration degrees, defined according to ASTM D 217, are obtained depending on the relative amounts of perfluoropolyether oil with respect to the thickener. Other components, generally contained in lubricating grease compositions, are dispersants as, for example, surfac- tants, in particular those non ionic and preferably having a perfluoropolyether or perfluoroalkyl structure; additives as talc or inorganic fillers. Furthermore, the lubricant grease compositions can also contain the additives commonly used in the grease formulations as, for example, anti-rust, antioxidant or anti-wear additives. The amounts of said additives are those generally used in this field.

The (per)fluoropolyethers of formula (1) are prepared through a process allowing to obtain directly various grades of oils having predetermined number average molecular weight and/or predetermined molecular weight distribution, and particularly suitable for the specific application, without requiring expensive fractionations or chemical treatments.

A further object of the present invention is therefore the process for preparing (per)fluoropolyethers of formula (1) comprising:
(I) reaction of a (per)fluoropolyether dithiol of formula:

   HS-Y-R'f-Y'-SH (2)

   with a (per) fluoropolyether sulphonic diester of formula:

   RS (O)₂O-Y-Rf-Y'-OS(O)₂R (3)

   wherein:
   - Rf, R'f, Y' and Y' are as above defined;
   - R is a perfluoroalkyl chain having a carbon atom number between 1 and 4, preferably 4 or a -CH₃,
   - Ph-CH₃, -Ph-NO₂ group,
   in a molar ratio dithiol (2)/sulphonic diester (3) between 0.5 and 4, preferably between 1 and 2, in the presence of a base, dissolved in a solvent, wherein the equivalent ratio dithiol/base is between 0.5 and 2, preferably between 1 and 2, at a temperature in the range 30°C-120°C, preferably 70°C-100°C, optionally in the presence of a fluorinated organic solvent.
(II) the salts precipitated from the reaction mass obtained in step (I) are separated and the organic phase is neutralized, e.g. with aqueous diluted acids, and optionally residual organic salts are removed, e.g. by repeatedly washing with water, and then the solvent, if present, is removed from the obtained product.

Known methods, for example evaporation, are used to remove the solvent.

The molar ratio dithiol/sulphonic diester is selected in the range 0.5-4, preferably 1-2, depending on the molecular weight to be obtained. The nearer to 1 said ratio, the higher the molecular weight of the (per)fluoropolyether of formula (1).

As bases, inorganic bases can be used as, for example, KOH or organic bases as tertiary aliphatic, alicyclic and aromatic amines, for example triethylamine. Preferably as a base, an alcoholic KOH solution having a concentration in the range 5%-30% w/w, preferably 10%-20% w/w is used.

The fluorinated organic solvent is selected from perfluorinated, hydrofluorinated solvents, or their mixtures, having a boiling point in the range 30°C-150°C, preferably 70°C-100°C, for example Galden® D100 (mixture 1:1 by weight of perfluoropropyl-tetrahydropyran and perfluorobutyl-tetrahydrofuran), and the ratio by weight solvent/fluorinated dithiol is between 0.5 and 4, preferably between 1 and 2.

The reaction times, varying depending on the temperature, are generally between 8 and 24 hours.

At the end of the reaction of step (I), step (II) follows:

The separation of the precipitated salts in step (II) can be carried out, for example, by filtration.

Said process allows to obtain the compounds of formula (1) in a yield higher than 90% and a selectivity higher than 98%. In particular the (per)fluoropolyether dithiols of formula (2) can be prepared, for example, according to USP 3,810,874 starting from (per) fluoropolyether diols of formula:

HO-Y-R'f-Y'-OH (4)

wherein R'f, Y, Y' have the above reported meaning, first transforming them into sulphonic diesters, by reacting, for example, with sulphonyl fluorides in the presence of triethylamine (therby obtaining compounds of formula (3)). Then the compounds odf formula (3) are reacted with sodium thiolacetate to obtain the thiolacetic (per)fluoropolyether diesters of formula:

CH₃C(O)-S-Y-R'f-Y'-S-C(O)CH₃ (5)

wherein R'f, Y and Y' have the above meaning, from which the (per)fluoropolyether dithiols of formula (2) are obtained by hydrolysis.

In particular when Y and/or Y' is -CF(CF₃)CH₂ or - CFXCH₂(OCH₂CH₂)_{z}, then the precursors of formula (4) contain these linking groups. These precursors are prepared, for example, according to USP 3,847,978. By applying the teaching of USP 3,810,874 to these compounds, the perfluoropolyethers of formula (2), via the sulphonic diesters, are obtained.

The Applicant has found a preferred process to obtain the (per) f luoropolyether dithiols of formula (2) in high yield and selectivity. By starting from this way the Applicant has found that it is possible to obtain compounds of formula (1) in yield higher than 90% and selectivity higher than 98%.

A further object of the present invention is therefore a process for preparing (per)fluoropolyether dithiols of formula:

HS-Y-R'f-Y'-SH (2)

wherein Rf, R'f, Y and Y' are as above,
comprising the following steps:
(A1) reaction of a (per)fluoropolyether diol having formula:

   HO-Y-R'f-Y'-OH (4)

   wherein R'f, Y and Y' are as defined above,
   with a sulphonyl halide of formula:

   RS(O)₂W (6)

   wherein W = halogen, preferably F;
   R is a perfluoroalkyl chain having a number of carbon atoms between 1 and 4, preferably 4 or a -CH₃, -Ph-CH₃,-Ph-NO₂ group (Ph being phenyl),
   in an equivalent ratio diol (4)/sulphonyl halide (6) between 1:1 and 1:1.5, preferably 1:1.1, in the presence of a base with an equivalent ratio base/sulphonyl halide between 1:1 and 1:1.5, preferably 1.1:1, at a temperature between -20°C and 10°C, preferably between -10°C and 0°C, thereby obtaining a (per)fluoropolyether sulphonic
   diester of formula:

   RS (O)₂O-Y-Rf-Y'-OS(O)₂R (3)

   wherein:
   R, Rf, R'f, Y and Y' have the above meaning,
(B1) reaction of the compound of formula (3) with thiolacetate of an alkaline metal M having formula CH₃C(O)SM, preferably M = potassium, in an equivalent ratio sulphonic diester (3)/thiolacetate between 1:1 and 1:1.2, preferably 1:1.1, in the presence of a mixture 1:1 v/v of a fluorinated organic solvent and an aliphatic alcohol having boiling point higher than 50°C, preferably ethanol, with a ratio by weight between the mixture of solvents and the sulphonic diester (3) between 0.5 and 4, preferably between 1 and 2, in inert atmo- sphere, at a temperature in the range 30°C- 80°C, preferably 50°C-70°C, thereby obtaining a thiolacetic (per)fluoropolyether diester of formula:

   CH₃C(O)-S-Y-R'f-Y'-S-C(O)CH₃ (5)
wherein R'f, Y and Y' have the above meaning; (C1) reacting the mixture obtained in step (B1) with anhydrous HCl with an equivalent ratio thiolacetic diester/HCl between 1:1 and 1:10, preferably between 1:5 and 1:7, at a temperature in the range 50°C-100°C, preferably 80°C-100°C, thereby obtaining the (per) fluoropolyether dithiol of formula (2).

In step (A1) tertiary aliphatic, alicyclic or aromatic amine, preferably triethylamine (TEA) are preferably used as bases.

The reaction times in step (A1) are generally between 8 and 16 hours.

At the end of step (A1) the compound of formula (3) is separated for instance, firstly diluting the reaction mass with a fluorinated organic solvent, for example Galden® D100, and then repeatedly washing with an alcohol, for example methanol, obtaining two phases, an alcoholic phase rich in ammonium salts and an organic phase from which the perfluoropolyether sulphonic diester of formula (3) is isolated by evaporation of the organic solvent.

In step (B1) the fluorinated organic solvent can be aliphatic or aromatic, preferably aromatic; in alternative the solvent is selected from perfluorinated or hydrofluorinated ones.

The reaction times in step (B1) are generally between 8 and 16 hours.

At the end of step (B1) the precipitated organic salts are separated, e.g. by filtration, and the reaction mass is repeatedly washed with water. The organic phase containing the compound of formula (5) is separated from the aqueous phase, then compound (5) is isolated by evaporation of the solvent.

In step (C1) the alcoholysis of the compound of formula (5) takes place.

The reaction times in step (C1) are between 8 and 10 hours.

The reaction mixture obtained in (C1) is repeatedly washed with water with formation of two phases. Compound (2) is then isolated by the organic phase by evaporation of the solvents.

It has been unexpectedly and surprisingly found that step (B1) takes place without any secondary reactions. This allows to isolate the (per)fluoropolyether dithiol of formula (2) with high yield and selectivity. Generally the yield is higher than 98%, and the selectivity is close to 100%. As said, the high yield of this process allows to obtain the compounds of formula (1) of the present invention with a yield higher than 90% and selectivity higher than 98%.

As said above, the (per)fluoropoluyethers of formula (1) of the present invention show the advantage to be obtained by a high selectivity process and with predetermined molecular weight ranges by varying the molar ratio between (2) and (3). The compound of formula (1) furthermore show a very good combination of properties as, for example, high viscosity index and low surface tension, so to be usable as lubricants.

The (per)fluoropolyether lubricants of formula (1) of the present invention have been characterized by kinematic viscosity measurements at 20°C, at 40°C and at 100°C, viscosity index, weight loss at 149°C and at 204°C and density in order to evaluate the lubricating properties.

As said, the (per)fluoropolyethers of formula (1) of the present invention are usable as lubricants, oils and greases, since they show a very good combination of physical properties which make them particularly suitable to be used as lubricants. Furthermore the compounds of formula (1) show a high thermal stability, higher than 200°C, a high chemical stability towards Lewis acids, or metals in the presence of oxygen, known agents particularly aggressive for perfluoropolyethers.

Tests carried out by the Applicant have shown that the lubricants (1) of the invention are also capable to confer to metal surfaces high corrosion resistance in wet environment, thus allowing a metal lifetime of at least ten times higher than that of the known perfluoropolyether lubricant oils.

It has furthermore been surprisingly found by the Applicant that the compounds of formula (1) of the present invention can be used also as additives in amounts from 0.05% up to 10%, preferably up to 5%, more preferably up to 3%, to confer to the known fluorinated oils of the prior art, preferably perfluoropolyether, improved anticorrosive properties to metal in wet environment, for long periods of time. (In particular no corrosion of metal is observed after 24 hours in the fog chamber test). See the Examples and the characterization.

The present invention will be better illustrated by the following Examples, which have a merely illustrative, but not limitative purpose of the invention.

### EXAMPLES

### CHARACTERIZATION

### Determination of the molecular weight

It has been determined by ¹⁹F NMR analysis.

### Viscosity index

The determination of the viscosity index is carried out by using the kinematic viscosity data at 40°C and at 100°C by applying the ASTM D 2270 method.

### Resistance to Lewis acids

It has been evaluated by using, as reactants, Lewis acids which are known to be particularly aggressive towards compounds containing perfluoropolyoxyalkylene chains. The determination of the stability to Lewis acids of the oils of the present invention has been carried out as follows.

5 grams of the fluid to be tested and 0.1 grams of AlF₃ are introduced in a glass test tube (about 10 cc). The test tube is weighed and closed with a screw plug having an hole in the center on which a 30 cm PTFE little tube is fixed which conveys possible decomposition products into a NaOH solution (0.1 N) contained in a collecting cylinder. The test tube is then heated to 250°C for 24 hours. At the end the test tube is cooled and weighed.

The difference of weight before and after the heating, referred to the sample weight before the test, gives the per cent weight loss of the fluid to be tested.

### Thermooxidative stability

The thermal stability has been evaluated in the presence of metals and air by using the microoxidation test described hereinafter and by using the equipment described by Carl E. Snyder, Jr. and Ronald E. Dolle, Jr., in ASLE Transactions, 13(3), 171-180 (1975*).*

The employed operating conditions were the following:
test temperature: 250°C;
air flow: 1 l/h;
metals dipped in the fluid: stainless steel (AISI 304) and Ti alloy (Al 6%, V 4%).

The fluid under examination is introduced in the glass test tube of the equipment shown in the reference Fig. 1 and the whole is weighed and brought to the test temperature. When 24 hours have elapsed, the glass test tube, cooled at room temperature, is weighed again. The difference of weight before and after the heating determines the per cent weight loss of the fluid under examination. The state of the metals dipped into the fluid after the test is visually evaluated.

### Thermal stability

It has been evaluated by measuring the weight loss at 149°C and at 204°C according to the ASTM D 972 method by thermogravimetric analysis.

### Anticorrosive properties

The anticorrosive properties of the compounds of the present invention have been evaluated by the fog chamber test (ASTM B 117) but by using demineralized water. Object of said test is the determination of the anticorrosive properties of oils on metals in high humidity conditions.

The method requires that small carbon C-15 steel sheets, superficially treated as it will be described hereinafter, are dipped into a solution of the oil to be tested, extracted and allowd to drain and then suspended in a fog chamber at the temperature of 35°C, with a relative humidity rate equal to 100% for a predetermined number of hours.

The oil passes or does not pass the test depending on the corrosion stains visible on the sheet surface. The fog chamber consists in a compressed-air atomizer (pressure = 2.5 atm), connected to a water tank and capable to saturate the environment with humidity; the temperature is set and maintained at 35°C.

The tests were carried out by operating as follows: the sheets were cleaned and degreased by means of a flock soaked first with n-hexane and then with Delifrene^{®} 113. They were then dipped and then extracted from the solution containing the oil, vertically hanged and allowed to drip for 16 hours. They were then introduced in the fog chamber, which is maintained working for the whole duration of the test.

The results of the test are expressed according to the following classification:
(0) corrosion absence;
(1) very few corrosion stains having a diameter < 1 mm;
(2) 30% of the surface covered by small stains having a diameter < 2 mm;
(3) 60% of the surface covered by small stains having a diameter < 3 mm;
(4) 100% of the surface covered by large stains having a diameter of 4-5 mm, with bright surface visible in some points;
(5) 100% of the surface covered by large stains; the underlying surface is not visible.

When the evaluation is (0), the result is considered excellent and the evaluation (1) is considered acceptable.

### EXAMPLE 1

### Preparation of the oil of formula (1) wherein Y = Y' =-CF₂CH₂-; Rf = R'f = - (CF₂CF₂O)_{c}(CF₂O)_{d}- with c and d integers such that the number average molecular weight of -Y-R'f-Y'- (and -Y-Rf-Y'-) is equal to 2,000.

In a 0.25 litre glass reactor, equipped with mechanical stirring, thermometer and condenser are introduced in inert nitrogen atmosphere:
- 28 g (29 meq) of a (per)fluoropolyether dithiol of formula (2) wherein Y = Y' = -CF₂CH₂-; R'f = -(CF₂CF₂O)_{c}(CF₂O)_{d}- with c, d integers such that the number average molecular weight of -Y-R' f-Y' - is equal to 2,000;
- 36.5 g (29 meq) of a sulphonic (per) fluoropolyether diester of formula (3) wherein Y = Y' = -CF₂CH₂-; Rf = -(CF₂CF₂O)_{c}(CF₂O)_{d}- with c, d integers such that the number average molecular weight of Y-Rf-Y' is equal to 2,000; R = CF₃CF₂CF₂CF₂-.
The mixture obtained is put under stirring, then 9.7 g of alcoholic KOH (20% w/w in ethanol (EtOH); 29 meq) are dropped at room temperature.

The reaction mixture is then heated up to 80°C and maintained at said temperature for 8 hours. At this point, it is cooled to room temperature and the mass is diluted with 100 ml of Galden^{®} D100.

The salts precipitated during the reaction are filtered and then two washings are carried out with water (2 x 20 ml), each time recovering the lower fluorinated organic phase.

The obtained product is then isolated by evaporation under vacuum of the solvent.

59 g of a viscous oil are obtained which at the NMR (¹⁹F and ¹H) analysis results to be the (per)fluoropolyether of formula (1) wherein n = 4 and the number average molecular weight (from NMR) results to be equal to 14,000.

The properties of said oil are reported in Table 1 in comparison with a commercial perfluoropolyether lubricant Fomblin^{®} M60 having perfluoroalkyl end gorups and a similar number average molecular weight.

It is evident from the data reported in Table 1 that the (per) fluoropolyether of formula (1) has an excellent viscosity index comparable with that of the commercial perfluoropolyether oil.

### EXAMPLE 2

### Preparation of the compound of formula (1) wherein Y = Y' = -CF₂CH₂O(CH₂)₃-; Rf = R'f = -(CF₂CF₂O)_{c}(CF₂O)_{d}- wherein c, d are integers such that the number average molecular weight of -Y-R'f-Y'- (and -Y-Rf-Y'-) is equal to 2,000.

The Example 1 was exactly repeated, except that a compound of formula (2) is used, wherein Y = Y' = -CF₂CH₂-; R'f = -(CF₂CF₂O)_{c}(CF₂O)_{d}- wherein c, d are integers such that the number average molecular weight of -Y-R'f-Y'- is equal to 2,000 (obtained according to what described in the Example 3) starting from a perfluoropolyether diol of formula (4) wherein Y = Y' = -CF₂CH₂O(CH₂)₃-; Rf = R'f = -(CF₂CF₂O)_{c}(CF₂O)_{d}- wherein c, d are integers such that the number average molecular weight of -Y-Rf-Y' is equal to 2,000.

The properties of said oil are reported in Table 1 in comparison with a commercial perfluoropolyether lubricant Fomblin^{®} M60 having perfluoroalkyl end groups and a similar number average moelcular weight.

It is evident from the data reported in Table 1 that the (per) fluoropolyether of formula (1) has an excellent viscosity index comparable with that of the commercial perfluoropolyether oil.

### EXAMPLE 3

The compounds prepared in the Examples 1 and 2 were subjected to the thermal stability test, evaluating the weight loss at evaporation at the predetermined temperatures in comparison with that of a known perfluoropolyether, Fomblin^{®} M60.

The results are reported in Table 2.

### EXAMPLE 4

The stability test to Lewis acids for oils is carried out by employing 5 g of:
- (per)fluoropolyether of the Example 1;
- Fomblin^{®} M60;
- Fomblin^{®} Z25 (number average molecular weight of 10,000). After 24 hours the fluid weight loss is determined which results to be:

- 10% in the case of the Example 1 (per)fluoropolyether;
- 50% in the case of Fomblin^{®} M60;
- completely decomposed after 5 hours from the beginning of the test in the case of Fomblin Z25;
the data are reported in Table 3.

### EXAMPLE 5

The stability test to microoxidation is carried out on the Example 1 oil. After 24 h at 250°C a weight loss of 1.6% is observed.

### EXAMPLE 6

Four steel sheets, suitably washed, were treated with solutions at 5% by weight in Galden SV70 of:
- (per)fluoropolyether of formula (1) of the Example 1;
- (per)fluoropolyether of formula (1) of the Example 2;
- Fomblin^{®} YR1800 (perfluoropolyether with perfluoroalkyl end groups);
- Fomblin^{®} M60 (perfluropolyether with perfluoroalkyl end groups).

After drying, the sheets were placed in fog chamber together with an untreated sheet (control) to evaluate the anticorrosion properties by the test described in the characterization. The obtained results are summarized in Table 4.

From the data of Table 4 it is evident that the sheets treated with the oils of the present invention show an excellent resistance to corrosion even for prolonged exposure times, said times being far higher than those of the prior art perfluoropolyethers having a comparable viscosity index.

On the contrary, the sheets treated with the knwon perfluoropolyether oils act as the untreated sheets, thus not conferring any anticorrosion property.

### EXAMPLE 7

A solution of Galden^{®} SV 70 was prepared containing:
- 5% by weight of Fomblin Y 1800 oil;
- 0.3% of the compound (1) of the Example 1.

Said solution was used to treat a sheet according to what described above with regard to the corrosion test.

The sheet was then placed in a fog chamber together with an untreated sheet (control) and with a sheet treated with a solution of Galden SV 70 containing only the Fomblin YR 1800 oil to evaluate the anticorrosive properties according to what described in the characterization.

The obtained results are summarized in Table 5.

From the data of Table 5 it is evident that the sheet treated with the oil additioned with the compounds of the present invention shows an excellent resistance to corrosion even for prolonged exposure times, higher than 400 hours (evaluation 0).

On the contrary, the sheet treated only with oil (not additived) comparably acts as the control indicating a complete lack of protection from corrosion.

### EXAMPLE 8

### Preparation of a perfluoropolyether dithiol of formula (2) wherein Y = Y' = -CF₂CH₂-; R' f = -(CF₂CF₂O)_{c}(CF₂O)_{d} - wherein c, d are integers such that the number average molecular weight of Y-R'f-Y' is equal to 2,000.

**(A1): Preparation of the compound of formula (3) wherein** Y = Y' = -CF₂CH₂-; Rf = -(CF₂CF₂O)_{c}(CF₂O)_{d}- wherein c, **d are integers such that the number average molecular weight of Y-Rf-Y' is equal to 2000 and R = CF₃CF₂CF₂CF₂-.**

34.2 g of perfluorobutansulphonyl fluoride (113 meq) and 12.6 g of anhydrous triethylamine (TEA) (124.3 meq) are introduced at room temperature and under inert nitrogen atmosphere into a 0.5 litre glass reactor, equipped with mechanical stirring, thermometer and 100 ml balanced dropping funnel. The mixture is put under stirring and cooled with an alcohol and dry ice bath at a temperature between -5° and -10°C.

At this point 100 g of perfluoropolyether diol of formula (4) are fed wherein Y = Y' =-CF₂CH₂-, Rf = -(CF₂CF₂O)_{c}(CF₂O)_{d}-wherein c, d are integers such that the number average molecular weight of Y-Rf-Y' is equal to 2,000 (103 meq).

The dropping is regulated so that the mass temperature remains lower than -5°C. when the dropping is over, the mixture is maintained in temperature up to complete conversion of the perfluoropolyether diol.

The mixture is then let reach the room temperature, it is diluted with 100 ml of Galden^{®} D100, the fluorinated phase is separated from the TEA and two washings are carried out with methyl alcohol (2 x 30 ml).

After solvent distillation under vacuum, 125 g of sulphonic perfluoropolyether diester of formula (3) are obtained (yield 96%; selectivity 98÷99%).

The product structure is confirmed by the NMR analyses (¹⁹F, H, ¹³C).
**(B1): Preparation of the compound of formula (5) wherein Y = Y' = -CF₂CH₂-; Rf is (CF₂CF₂O)_{c}(CF₂O)_{d}- with c and d integers such that the number average molecular weight of Y-Rf-Y' is equal to 2000.**

In a 0.5 litre glass reactor, equipped with mechanical stirring, thermometer and condenser there are introduced in inert nitrogen atmosphere: 100 g of sulphonic (per) fluoropolyether diester of the phase A) (77 meq), 9.7 g of potassium thiolacetate (84.7 meq), 100 ml of ethanol and 100 ml of 1,3-bis-trifluoromethyl-benzene (hexafluoroxylene; EFX).

The reaction mixture is put under stirring and heated until reaching an internal temperature between 60°C and 70°C. It is maintained at said temperature until complete conversion of the sulphonic diester.

It is cooled at room temperature and the potassium perfluorobutansulphonate precipitated during the reaction is filtered. The filtered mixture is washed twice with water (2 x 50 ml), each time recovering the lower fluorinated organic phase. After distillation of the EFX under vacuum, 79.8 g of an yellow oil are recovered, which, analyzed by NMR (¹⁹F, ¹H), results to be the thiolacetic perfluoropolyether diester of formula (5) (yield 98%; selectivity 98%).

### (C1): Preparation of the above described compound of formula (2)

In a 0.25 litre glass reactor, equipped with mechanical stirring, thermometer and condenser there are introduced in inert nitrogen atmosphere: 40 g of thiolacetic perfluoropolyether diester (5) prepared in step B) (37.8 meq), 40 ml of EFX and 40 ml of ethanol. 4 g of anhydrous HC1 are bubbled at room temperature into the so obtained solution. The reaction mixture is then heated up to 80°C-90°C and maintained at said temperature for 8 hours.

At this point, it is cooled to room temperature and two washings with water (2 x 20 ml) are carried out, each time recovering the lower fluorinated phase. After evaporation of the solvent, 38 g of perfluoropolyether dithiol of formula (2) are obtained, which appears as an yellow oil (yield 98%; selectivity 98%).

### EXAMPLE 9 (comparative)

The Example 8 was repeated, except that the step (C1) was carried out by hydrolysis according to the teaching reported in USP 3,810,874.

In a 0.1 litre glass reactor, equipped with mechanical stirring, thermometer and 20 ml balanced dropping funnel there are introduced in inert nitrogen atmosphere:
- 10 g (9.45 meq) of thiolacetic perfluoropolyether diester of formula (5) wherein Y = Y' = -CF₂CH₂-; Rf is -(CF₂CF₂O)_{c}(CF₂O)_{d}- wherein c, d are integers such that the number average molecular weight of Y-Rf-Y' is equal to 2,000;
- 10 ml of EFX.

The so obtained solution is put under stirring, then 10 g of alcoholic KOH (20% w/w in EtOH) are dropped at room temperature. After one hour the conversion of the starting thiolacetic diester is complete. It is acidified with diluted HC1, the lower fluorinated phase is recovered, it is washed with water and the solvent is removed by evaporation under reduced pressure.

The product (9 g) from the NMR analysis (19F and 1H) results to be a mixture of perfluoropolyether dithiol of formula (2) (-SH 80% on molar basis) and of perfluoropolyether ended with carboxylic groups of -CO₂H type (16% on molar basis). Besides, by-products containing -S- and -S-S- groups are present.

The insufficient purity of the so obtained product does not allow its utilization for preparing the oils (1) of the present invention.

### EXAMPLE 10

The Example 8 was repeated maintaining the same ratios in equivalents for all the reactants of steps (A1), (B1), (C1) except that a (per)fluoropolyether diol of formula (4) was used wherein Y = Y'= -CF₂CH₂O-(CH₂)₃- and the molecular weight of Y-R'f-Y' equal to 2,000. A dithiol of formula (2) was obtained with yield and selectivity higher than 98%.

**TABLE 1**

| **Properties** | **Oil of the Example 1** | **Oil of the Example 2** | **Fomblin^{®} M60** |
|---|---|---|---|
| MW (a.m.u) | 14,000 | 14,400 | 12,500 |
| Density g/cm³ | 1.83 | 1.81 | 1.86 |
| Kinematic viscosity at 20°C (cSt) | 904 | 1754 | 550 |
| Kinematic viscosity at 40°C (cSt) | 445 | 848 | 310 |
| Kinematic viscosity at 100°C (cSt) | 118 | 178 | 86 |
| Viscosity index | 345 | 325 | 343 |
| Weight loss at 149°C (%) | 0.12 | 0.13 | 0 |
| Weight loss at 204°C (%) | 0.8 | 0.7 | 0.4 |

**TABLE 2: Thermal stability**

| **Properties** | **Oil of the Example 1** | **Oil of the Example 2** | **Fomblin® M60** |
|---|---|---|---|
| Weight loss at 149°C (%) | 0.12 | 0.13 | 0 |
| Weight loss at 204°C (%) | 0.8 | 0.7 | 0.4 |

**TABLE 3: Chemical stability to Lewis acids**

| **Properties** | **Oil of the Example 1** | **Fomblin^{®} M60** | **Fomblin^{®} Z25** |
|---|---|---|---|
| Weight loss (%) | 10 | 50 | totally decomposed |

**TABLE 4: Corrosion test with lubricating oils**

| t (h) | Control | Fomblin^{®} | | Oil of the Example 1 | Oil of the Example 2 |
|---|---|---|---|---|---|
| | | YR 1800 | M60 | | |
| 0 | 0 | 0 | 0 | 0 | 0 |
| 24 | 2 | 1 | 2 | 0 | 0 |
| 48 | 3 | 1 | 2 | 0 | 0 |
| 72 | 3 | 2 | 2 | 0 | 0 |
| 144 | 3 | 2 | 2 | 0 | 0 |
| 168 | 3 | 2 | 2 | 0 | 0 |
| 192 | 3 | 2 | 2 | 0 | 0 |
| 240 | 3 | 2 | 2 | 0 | 0 |
| 312 | 4 | 3 | 3 | 0 | 0 |
| 408 | 4 | 3 | 3 | 0 | 0 |
| 480 | 4 | 3 | 3 | 0 | 0 |
| 504 | 4 | 4 | 4 | 1 | 1 |
| 864 | 5 | 4 | 4 | 1 | 1 |

**TABLE 5: Corrosion test with lubricating compositions**

| t (h) | Control | Fomblin^{®} YR 1800 | YR 1800 + 0.3% PFPE of the Example 1 |
|---|---|---|---|
| 0 | 0 | 0 | 0 |
| 24 | 2 | 1 | 0 |
| 48 | 3 | 1 | 0 |
| 72 | 3 | 2 | 0 |
| 144 | 3 | 2 | 0 |
| 168 | 3 | 2 | 0 |
| 192 | 3 | 2 | 0 |
| 240 | 3 | 2 | 0 |
| 312 | 4 | 3 | 0 |
| 408 | 4 | 3 | 0 |
| 480 | 4 | 3 | 1 |
| 504 | 4 | 4 | 1 |
| 864 | 5 | 4 | 2 |

## Claims

1. (Per)fluoropolyethers having formula:
HS-(Y-R'f-Y'-S-Y-Rf-Y'S)ₙ-H (1)
wherein
- the Rf, R'f chains are perfluoropolyoxyalkylene chains, equal to or different from each other, formed of one or more repeating units, statistically placed along the chain, having the following structures:
(CFXO), (CF₂CF₂O), (C₃F₆O), (CF₂(CF₂)_{z},O) wherein z' is an integer equal to 2 or 3, (CR₄R₅CF₂CF₂O), wherein X = F, CF₃; R₄ and R₅, equal to or different from each other, are selected from H, Cl, or perfluoroalkyl from 1 to 4 carbon atoms, said Rf, R'f having a number average molecular weight in the range 500-10,000, preferably 800-3,000;
- Y and Y' are equal to or different from each other and are selected from -CF₂CH₂-, -CF(CF₃) CH₂-,
CFXCH₂(OCH₂CH₂)_{z}- wherein z ranges from 1 to 4 and X is as above; -CF₂CH₂O(CH₂)₃ -, -CF(CF₃)CH₂O(CH₂)₃-;
- n is a positive integer higher than or equal to 1 selected so as to have a number average molecular weight of the compound (1) in the range 3,000-50,000.

2. Perfluoropolyethers according to claim 1, wherein the preferred perfluoropolyether Rf, R'f chains are selected from the following structures:
(A) -O-(CF₂CF(CF₃)O)ₐ(CFXO)_{b}-CF₂(Ra_{f})CF₂-O-(CF₂CF(CF₃)O)ₐ(CFXO)_{b}-
wherein X is F or CF₃; a and b are integers such that the number average molecular weight is in the above range; a/b is between 10 and 100, b being different from 0; Ra_{f} is a fluoroalkylene group from 1 to 4 C atoms;
(B) -O-(CF₂CF₂O)_{c}(CF₂O)_{d}(CF₂(CF₂)_{z'}O)ₕ-
wherein c, d and h are integers such that the number average molecular weight is in the above range; c/d is between 0.1 and 10, d being different from 0; h/(c+d) is between 0 and 0.05, (c+d) being different from 0; z' is 2 or 3; h can also be equal to 0;
(C) -O-(C₃F₆O)ₑ(CF₂CF₂O)_{f}(CFXO)_{g}-
wherein X is F or CF₃; e, f, g are integers such that the number average molecular weight is in the above range; e/(f+g) is between 0.1 and 10, (f+g) being different from 0; f/g is between 2 and 10, g being different ffrom 0; (C₃F₆O) can represent units of formula -(CF₂CF(CF₃)O) or -(CF(CF₃)CF₂O)-;
(D) -O-(CF₂(CF₂)_{z},O)ₛ-
wherein s is an integer such as to give the above molecular weight; z' has the already defined meaning;
(E) -O-(CR₄R₅CF₂CF₂O)_{j'}- or
-(CR₄R₅CF₂CF₂O)_{p'}-Ra_{f}-O-(CR₄R₅CF₂CF₂O)_{q'}-
wherein R₄ and R₅ are equal to or different from each other and selected from H, Cl or perfluoroalkyl from 1 to 4 C atoms; Ra_{f} is a fluoroalkylene group from 1 to 4 C atoms; j', p' and q' are integers such as to have a molecular weight as the above mentioned one;
(F) O-(CF(CF₃)CF₂O)_{j"}-Ra'ₜ-O-(CF(CF₃)CF₂O)_{j"}-
j" being an integer such a to give the above mentioned molecular weight; Ra'_{f} is a fluoroalkylene group from 1 to 4 C atoms.

3. (Per)fluoropolyethers according to claim 2, wherein the perfluoropolyether chains Rf, R'f are selected between the (A) and (B) structures.

4. Use of the perfluoropolyethers of claims 1-3 as lubricants, preferably in the presence of Lewis acids.

5. Lubricating compositions comprising the oils of formula (1) of claims 1-3 and anti-rust additives and/or antioxidant additives and/or anti-wear additives.

6. Lubricating greases comprising a perfluoropolyether oil of claims 1-3 and a thickener, preferably selected from PTFE, sodium terephthalamate, calcium or lithium soaps, polyurea.

7. Lubricating greases of claim 6 comprising dispersants, preferably surfactants, more preferably non ionic surfactants having a perfluoropolyether or perfluoroalkyl structure; talc and/or inorganic fillers; anti-rust additives and/or antioxidant additives and/or anti-wear additives.

8. A process for preparing (per)fluoropolyethers of formula (1) of claims 1-3 comprising:
(I) reaction of a (per)fluoropolyether dithiol of formula:
HS-Y-R'f-Y'-SH (2)
with a (per)fluoropolyether sulphonic diester of formula:
RS(O)₂O-Y-Rf-Y'-OS(O)₂R (3)
wherein:
- Rf, R'f, Y and Y' are defined as in claim 1,
- R is a perfluoroalkyl chain having a number of carbon atoms between 1 and 4, preferably 4, or a -CH₃, -Ph-CH₃, -Ph-NO₂ group,
in a molar ratio dithiol (2)/sulphonic diester (3) between 0.5 and 4, preferably between 1 and 2, in the presence of a base, dissolved in a solvent, wherein the equivalent ratio dithiol/base is between 0.5 and 2, preferably between 1 and 2, at a temperature in the range 30°C-120°C, preferably 70°C-100°C, optionally in the presence of a fluorinated organic solvent.
(II) the salts precipitated from the reaction mass obtained in step (I) are separated and the organic phase is neutralized, e.g. with aqueous diluted acids, and optionally residual organic salts are removed, e.g. by repeatedly washing with water, and then the solvent, if present, is removed from the obtained product.

9. A process according to claim 8, wherein the base is an inorganic base, preferably KOH, or an organic base, preferably tertiary aliphatic, alicyclic and aromatic amines, more preferably triethylamine.

10. A process according to claim 9, wherein as a base an alcoholic KOH solution is used at a concentration between 5% and 30% w/w, preferably between 10% and 20% w/w.

11. A process according to claims 8-10, wherein the fluorinated organic solvent is selected from perfluorinated, hydrofluorinated solvents, or their mixtures, having a boiling point in the range 30°C-150°C, preferably 70°C-100°C, for example Galden^{®} D100 (mixture 1:1 by weight of perfluoropropyltetrahydropyran and perfluorobutyltetrahydrofuran).

12. A process according to claims 8-11, wherein the ratio by weight solvent/fluorinated dithiol is between 0.5 and 4, preferably between 1 and 2.

13. A process according to claims 8-12, wherein the reaction times are between 8 and 24 hours.

14. A process for preparing the (per)fluoropolyether dithiols of formula:
HS-Y-R'f-Y'-SH (2)
wherein Rf, R'f, Y and Y' are as defined in claim 1, comprising the following steps:
(A1) reaction of a (per)fluoropolyether diol having formula:
HO-Y-R'f-Y'-OH (4)
wherein R'f, Y and Y' are as above,
with a sulphonyl halide of formula:
RS(O)₂W (6)
wherein W = halogen, preferably F;
R is a perfluoroalkyl chain having a number of carbon atoms between 1 and 4, preferably 4 or a -CH₃, -Ph-CH₃, -Ph-NO₂ group (Ph being phenyl), in an equivalent ratio diol (4)/sulphonyl halide (6) between 1:1 and 1:1.5, preferably 1:1., in the presence of a base with an equivalent ratio base/sulphonyl halide between 1:1 and 1:1.5, preferably 1.1:1, at a temperature between -20°C and 10°C, preferably between -10°C and 0°C, thereby obtaining a (per)fluoropolyether sulphonic diester of formula:
RS(O)₂O-Y-Rf-Y' -OS (O)₂R (3)
wherein:
R, Rf, R'f, Y and Y' have the above meaning;
(B1) reaction of the compound of formula (3) with thiolacetate of an alkaline metal M having formula CH₃C(O)SM, preferably M = potassium, in an equivalent ratio sulphonic diester (3)/thiolacetate between 1:1 and 1:1.2, preferably 1:1.1, in the presence of a mixture 1:1 v/v of a fluorinated organic solvent and an aliphatic alcohol having boiling point higher than 50°C, preferably ethanol, with a ratio by weight between the mixture of solvents and the sulphonic diester (3) between 0.5 and 4, preferably between 1 and 2, in inert atmosphere, at a temperature in the range 30°C-80°C, preferably 50°C-70°C, thereby obtaining a thiolacetic (per)fluoropolyether diester of formula:
CH₃C(O) -S-Y-R'f-Y'-S-C(O)CH₂ (5)
wherein R'f, Y and Y' have the above meaning;
(C1) reacting the mixture obtained in step (B1) with anhydrous HCl with an equivalent ratio thiolacetic diester (5)/HCl between 1:1 and 1:10, preferably between 1:5 and 1:7, at a temperature in the range 50°C-100°C, preferably 80°C-100°C, thereby obtaining the (per)fluoropolyether dithiol of formula (2).

15. A process according to claim 14, wherein in step (A1) tertiary aliphatic, alicyclic or aromatic amine, preferably triethylamine (TEA) are preferably used as bases.

16. A process according to claims 14-15, wherein the reaction times in step (A1) are generally between 8 and 16 hours.

17. A process according to claims 14-16, wherein, at the end of step (A1), the compound of formula (3) is separated, for instance, firstly diluting the reaction mass with a fluorinated organic solvent, for example Galden® D100, and then repeatedly washing with an alcohol, for example methanol, obtaining two phases, an alcoholic phase rich in ammonium salts and an organic phase from which the perfluoropolyether sulphonic diester of formula (3) is isolated by evaporation of the organic solvent.

18. A process according to claims 14-17 wherein in step (B1) the fluorinated organic solvent can be aliphatic or aromatic, preferably aromatic; in alternative the solvent is selected from perfluorinated or hydrofluorinated ones.

19. A process according to claims 14-18, wherein the reaction times in step (B1) are generally between 8 and 16 hours.

20. A process according to claims 14-19, wherein, at the end of step (B1) the precipitated organic salts are separated, e.g. by filtration, and the reaction mass is repeatedly washed with water. The organic phase containing the compound of formula (5) is separated from the aqueous phase, then compound (5) is isolated by evaporation of the solvent.

21. A process according to claims 14-20, wherein the reaction times in step (C1) are between 8 and 10 hours.

22. A process according to claims 14-21, wherein the reaction mixture obtained in (C1) is repeatedly washed with water with formation of two phases. Compound (2) is then isolated by the organic phase by evaporation of the solvents.

23. A process according to claims 8-14 comprising the preparation of claims 14-22 of the (per)fluoropolyether dithiols of formula (2).

24. Use of the perfluoropolyethers of claims 1-3 to confer to metal surfaces corrosion resistance.

25. Use of the perfluoropolyethers of claims 1-3 as anticorrosion additives for fluorinated oils, preferably perfluoropolyether oils, in amounts from 0.05% up to 10%, preferably up to 5%, more preferably up to 3%.

## Patentansprüche

1. (Per)fluorpolyether mit der Formel:
HS-(Y-R'f-Y'-S-Y-Rf-Y'S)ₙ H (1)
worin
- die Ketten Rf, R'f Perfluorpolyoxyalkylen-Ketten sind, die gleich oder verschieden voneinander sind, gebildet aus einer oder mehreren Struktureinheiten, die statistisch entlang der Kette angeordnet sind, mit den folgenden Strukturen:
(CFXO), (CF₂CF₂O), (C₃F₆O), (CF₂(CF₂)_{z'}O), worin z' eine ganze Zahl gleich 2 oder 3 ist, (CR₄R₅CF₂CF₂O), worin X = F, CF₃, R₄ und R₅ gleich oder verschieden voneinander sind und ausgewählt sind aus H, Cl oder Perfluoralkyl mit 1 bis 4 Kohlenstoffatomen, wobei Rf, R'f ein Zahlenmittel des Molekulargewichts im Bereich von 500 bis 10.000, bevorzugt 800 bis 3.000, aufweisen;
- Y und Y' gleich oder verschieden voneinander sind und ausgewählt sind aus -CF₂CH₂-, -CF(CF₃)CH₂-, -CFXCH₂(OCH₂CH₂)_{z}-, worin z im. Bereich von 1 bis 4 liegt und X wie vorstehend ist; -CF₂CH₂O(CH₂)₃-, -CF(CF₃)CH₂O(CH₂)₃-;
- n eine positive ganze Zahl ist, die größer als oder gleich 1 ist, so ausgewählt, dass das Zahlenmittel des Molekulargewichts der Verbindung (1) im Bereich von 3.000 bis 50.000 liegt.

2. Perfluorpolyether nach Anspruch 1, worin die bevorzugten Perfluorpolyether-Ketten Rf, R'f aus den folgenden Strukturen ausgewählt sind:
(A) -O-(CF₂CF(CF₃)O)ₐ(CFXO)_{b}-CF₂(Ra_{f})CF₂-O-(CF₂CF(CF₃)O)ₐ(CFXO)_{b}-worin X F oder CF₃ ist, a und b solche ganze Zahlen sind, dass das Zahlenmittel des Molekulargewichts im vorstehenden Bereich ist; a/b zwischen 10 und 100 ist, wobei b von 0 verschieden ist; Ra_{f} eine Fluoralkylengruppe mit 1 bis 4 C-Atomen ist;
(B) -O-(CF₂CF₂O)_{c}(CF₂O)_{d}(CF₂(CF₂)_{z'}O)ₕ-
wobei c, d und h ganze Zahlen sind, so dass das Zahlenmittel des Molekulargewichts im vorstehenden Bereich ist; c/d zwischen 0,1 und 10 ist, wobei d von 0 verschieden ist; h/(c+d) zwischen 0 und 0,05 ist, (c+d) von 0 verschieden ist; z' 2 oder 3 ist; h auch gleich 0 sein kann;
(C) -O-(C₃F₆O)ₑ(CF₂CF₂O)_{f}(CFXO)_{g}-
worin X F oder CF₃ ist; e, f und g ganze Zahlen sind, so dass das Zahlenmittel des Molekulargewichts im vorstehenden Bereich ist; e/(f+g) zwischen 0,1 und 10 ist, wobei (f+g) von 0 verschieden ist; f/g zwischen 2 und 10 ist, wobei g von 0 verschieden ist; (C₃F₆O) Einheiten der Formel -(CF₂CF(CF₃)O) oder -(CF(CF₃)CF₂O)- darstellen kann;
(D) -O-(CF₂(CF₂)_{z'}O)ₛ-
worin s eine ganze Zahl ist, so dass sich das obige Molekulargewicht ergibt, z' die bereits definierte Bedeutung besitzt;
(E) -O-(CR₄R₅CF₂CF₂O)_{j'}- oder -(CR₄R₅CF₂CF₂O)_{p'}-Ra_{f}-O-(CR₄R₅CF₂CF₂O)_{q'}-
worin R₄ und R₅ gleich oder verschieden voneinander sind und ausgewählt sind aus H, Cl oder Perfluoralkyl mit 1 bis 4 C-Atomen; Ra_{f} eine Fluoralkylengruppe mit 1 bis 4 C-Atomen ist; j', p' und q' ganze Zahlen sind, so dass sich ein Molekulargewicht wie das vorstehend angegebene ergibt;
(F) -O-(CF(CF₃)CF₂O)_{j"}-Ra'_{f}-O-(CF(CF₃)CF₂O)_{j"}-
worin j" eine ganze Zahl ist, so dass sich das vorstehend angegebene Molekulargewicht ergibt; Ra'_{f} eine Fluoralkylengruppe mit 1 bis 4 C-Atomen ist.

3. (Per)fluorpolyether nach Anspruch 2, bei denen die Perfluorpolyether-Ketten Rf, R'f zwischen den Strukturen (A) und (B) ausgewählt sind.

4. Verwendung der Perfluorpolyether der Ansprüche 1 bis 3 als Schmiermittel, vorzugsweise in Anwesenheit von Lewis-Säuren.

5. Schmierzusammensetzungen, umfassend die Öle der Formel (1) der Ansprüche 1 bis 3 und Rostschutzadditive und/oder Antioxidationsmittel-Additive und/oder Antiverschleißzusätze.

6. Schmierfette, umfassend ein Perfluorpolyether-Öl der Ansprüche 1 bis 3 und ein Verdickungsmittel, bevorzugt ausgewählt aus PTFE, Natriumterephthalamat, Calcium- oder Lithiumseifen, Polyharnstoff.

7. Schmierfette nach Anspruch 6, umfassend Dispergiermittel, bevorzugt Tenside, bevorzugter nichtionische Tenside mit einer Perfluorpolyether- oder Perfluoralkyl-Struktur; Talkum und/oder anorganische Füllstoffe; Rostschutzadditive und/oder Antioxidationsmittel-Additive und/oder Antiverschleißzusätze.

8. Verfahren zur Herstellung von (Per)fluorpolyethern der Formel (1) der Ansprüche 1 bis 3, umfassend:
(I) Reaktion eines (Per)fluorpolyetherdithiols der Formel:
HS-Y-R'f-Y'-SH (2)
mit einem (Per)fluorpolyethersulfonsäurediester der Formel
RS(O)₂O-Y-Rf-Y'-OS(O)₂ (3)
worin:
- Rf, R'f, Y und Y' wie in Anspruch 1 definiert sind,
- R eine Perfluoralkyl-Kette mit mit einer Anzahl von Kohlenstoffatomen zwischen 1 und 4, bevorzugt 4, oder eine Gruppe -CH₃, -Ph-CH₃, -Ph-NO₂ ist
in einem molaren Verhältnis Dithiol (2)/ Sulfonsäurediester (3) zwischen 0,5 und 4, bevorzugt zwischen 1 und 2, in Anwesenheit einer Base, gelöst in einem Lösungsmittel, wobei das Äquivalentverhältnis Dithiol/Base zwischen 0,5 und 2, bevorzugt zwischen 1 und 2, liegt, bei einer Temperatur im Bereich von 30 bis 120°C, bevorzugt 70 bis 100°C, gegebenenfalls in Anwesenheit eines fluorierten organischen Lösungsmittels,
(II) die Salze, die aus der in Schritt (I) erhaltenen Reaktionsmasse ausgefallen sind, werden getrennt und die organische Phase wird neutralisiert, z.B. mit wässrigen verdünnten Säuren, und gegebenenfalls werden restliche organische Salze entfernt, z.B. durch wiederholtes Waschen mit Wasser, und dann wird das Lösungsmittel, falls vorhanden, aus dem erhaltenen Produkt entfernt.

9. Verfahren nach Anspruch 8, wobei die Base eine anorganische Base, bevorzugt KOH, oder eine organische Base, bevorzugt tertiäre aliphatische, alicyclische und aromatische Amine, bevorzugter Triethylamin, ist.

10. Verfahren nach Anspruch 9, bei dem als Base eine alkoholische KOH-Lösung bei einer Konzentration zwischen 5 % und 30 % Gew./Gew., bevorzugt zwischen 10 % und 20 % Gew./Gew., verwendet wird.

11. Verfahren nach den Ansprüchen 8 bis 10, bei dem das fluorierte organische Lösungsmittel aus perfluorierten, hydrofluorierten Lösungsmitteln oder deren Mischungen mit einem Siedepunkt im Bereich von 30 bis 150°C, bevorzugt 70 bis 100°C, z.B. Galden® D100 (Mischung 1:1, bezogen auf das Gewicht, von Perfluorpropyltetrahydropyran und Perfluorbutyltetrahydrofuran), ausgewählt wird.

12. Verfahren nach den Ansprüchen 8 bis 11, bei dem das Gewichtsverhältnis Lösungsmittel/fluoriertes Dithiol zwischen 0,5 und 4, bevorzugt zwischen 1 und 2, ist.

13. Verfahren nach den Ansprüchen 8 bis 12, bei dem die Reaktionszeiten zwischen 8 und 24 h betragen.

14. Verfahren zur Herstellung der (Per)fluorpolyetherdithiole der Formel:
HS-Y-R'f Y'-SH (2)
worin Rf, R'f, Y und Y' wie in Anspruch 1 definiert sind, umfassend die folgenden Schritte:
(A1) Reaktion eines (Per)fluorpolyetherdiols mit der Formel:
HO-Y-R'f-Y'-OH (4)
worin R'f, Y und Y' wie vorstehend sind,
mit einem Sulfonylhalogenid der Formel:
RS(O)₂W (6)
worin W = Halogen, bevorzugt F;
R eine Perfluoralkyl-Kette mit einer Anzahl von Kohlenstoffatomen zwischen 1 und 4, bevorzugt 4, oder eine Gruppe -CH₃, -Ph-CH₃, -Ph-NO₂ ist (wobei Ph Phenyl ist),
in einem Äquivalentverhältnis Diol (4)/ Sulfonylhalogenid (6) zwischen 1:1 und 1:1,5, bevorzugt 1:1, in Anwesenheit einer Base mit einem Äquivalentverhältnis Base/ Sulfonylhalogenid zwischen 1:1 und 1:1,5, bevorzugt 1,1:1, bei einer Temperatur zwischen -20 und 10°C, bevorzugt zwischen -10 und 0°C, wodurch ein (Per)fluorpolyethersulfonsäurediester der Formel:
RS(O)₂O-Y-Rf-Y'-OS(O)₂R (3)
erhalten wird, worin R, Rf, R'f, Y und Y' die obige Bedeutung aufweisen;
(B1) Reaktion der Verbindung der Formel (3) mit Thiolacetat von einem Alkalimetall M mit der Formel CH₃C(O)SM, bevorzugt M = Kalium, in einem Äquivalentverhältnis Sulfonsäuredieser (3)/Thiolacetat zwischen 1:1 und 1:1,2, bevorzugt 1:1,1, in Anwesenheit einer Mischung 1:1 Vol./Vol. von einem fluorierten organischen Lösungsmittel und einem aliphatischen Alkohol mit einem Siedepunkt von mehr als 50°C, bevorzugt Ethanol, mit einem Gewichtsverhältnis zwischen der Mischung von Lösungsmitteln und dem Sulfonsäurediester (3) zwischen 0,5 und 4, bevorzugt zwischen 1 und 2, in inerter Atmosphäre, bei einer Temperatur im Bereich von 30 bis 80°C, bevorzugt 50 bis 70°C, wodurch ein Thiolessigsäure(per)fluorpolyetherdiester der Formel:
CH₃C(O)-S-Y-R'f-Y'-S-C(O)CH₂ (5)
erhalten wird, worin R'f, Y und Y' die obige Bedeutung aufweisen;
(C1) Umsetzen der in Schritt (B1) erhaltenen Mischung mit wasserfreiem HCl in einem Äquivalentverhältnis Thiolessigsäurediester (5)/HCl zwischen 1:1 und 1:10, bevorzugt zwischen 1:5 und 1:7, bei einer Temperatur im Bereich von 50 bis 100°C, bevorzugt 80 bis 100°C, wodurch das (Per)fluorpolyetherdithiol der Formel (2) erhalten wird.

15. Verfahren nach Anspruch 14, bei dem in Schritt (A1) bevorzugt tertiäres aliphatisches, alicyclisches oder aromatisches Amin, bevorzugt Triethylamin (TEA), als Basen verwendet werden.

16. Verfahren nach den Ansprüchen 14 bis 15, bei dem die Reaktionszeiten in Schritt (A1) allgemein zwischen 8 und 16 Stunden sind.

17. Verfahren nach den Ansprüchen 14 bis 16, bei dem am Ende von Schritt (A1) die Verbindung der Formel (3) abgetrennt wird, wobei z.B. zuerst die Reaktionsmasse mit einem fluorierten organischen Lösungsmittel, z.B. Galden® D100, verdünnt wird, und dann wiederholt mit einem Alkohol, z.B. Methanol, gewaschen wird, wobei zwei Phasen erhalten werden, eine alkoholische Phase reich an Ammoniumsalzen und eine organische Phase, aus der der Perfluorpolyethersulfonsäurediester der Formel (3) durch Verdampfung des organischen Lösungsmittels isoliert wird.

18. Verfahren nach den Ansprüchen 14 bis 17, bei dem in Schritt (B1) das fluorierte organische Lösungsmittel aliphatisch oder aromatisch, bevorzugt aromatisch sein kann; alternativ wird das Lösungsmittel aus perfluorierten oder hydrofluorierten ausgewählt.

19. Verfahren nach den Ansprüchen 14 bis 18, bei dem die Reaktionszeiten in Schritt (B1) allgemein zwischen 8 und 16 Stunden sind.

20. Verfahren nach den Ansprüchen 14 bis 19, bei dem am Ende von Schritt (B1) die ausgefällten organischen Salze abgetrennt werden, z.B. durch Filtration, und die Reaktionsmasse wiederholt mit Wasser gewaschen wird, die organische Phase enthaltend die Verbindung der Formel (5) wird von der wässrigen Phase getrennt, und dann wird die Verbindung (5) durch Verdampfung des Lösungsmittels isoliert.

21. Verfahren nach den Ansprüchen 14 bis 20, bei dem die Reaktionszeiten in Schritt (C1) zwischen 8 und 10 Stunden sind.

22. Verfahren nach den Ansprüchen 14 bis 21, bei dem die in (C1) erhaltene Reaktionsmischung unter Bildung von zwei Phasen wiederholt mit Wasser gewaschen wird, die Verbindung (2) wird dann von der organischen Phase durch Verdampfung der Lösungsmittel isoliert.

23. Verfahren nach den Ansprüchen 8 bis 14, umfassend die Herstellung der (Per)fluorpolyetherdithiole der Formel (2) gemäß den Ansprüchen 14 bis 22

24. Verwendung der Perfluorpolyether der Ansprüche 1 bis 3, um Metalloberflächen Korrosionsbeständigkeit zu verleihen.

25. Verwendung der Perfluorpolyether der Ansprüche 1 bis 3 als Korrosionsschutzadditive für fluorierte Öle, vorzugsweise Perfluorpolyether-Öle, in Mengen von 0,05% bis zu 10%, bevorzugt bis zu 5%, bevorzugter bis zu 3%.

## Revendications

1. Polyéthers (per)fluorés ayant la formule :
HS-(Y-R'f-Y'-S-Y-Rf-Y'S)n-H (1)
dans laquelle
- les chaînes Rf, R'f sont des chaînes de polyoxyalkylène perfluoré, identiques ou différentes l'une de l'autre, formées d'une unité de répétition ou plus, statistiquement placées le long de la chaîne, ayant les structures suivantes :
(CFXO), (CF₂CF₂O), (C₃F₆O), (CF₂(CF₂)_{z'}O) où z' est un nombre entier égal à 2 ou à 3, (CR₄R₅CF₂CF₂O) où X = F, CF₃ ; R₄ et R₅, identiques ou différents l'un de l'autre, sont choisis parmi H, Cl, ou un groupe perfluoroalkyle ayant 1 à 4 atomes de carbone, lesdites Rf, R'f ayant une masse moléculaire moyenne en poids dans la gamme allant de 500 à 10 000, de préférence de 800 à 3000 ;
- Y et Y' sont identiques ou différents l'un de l'autre et sont choisis parmi -CF₂CH₂-, -CF(CF₃)CH₂-, -CFXCH₂(OCH₂CH₂)_{z}- où z se trouve dans la gamme allant de 1 à 4 et X est comme ci-dessus ; - CF₂CH₂O(CH₂)₃-, -CF(CFs)CH₂O(CH₂)₃- ;
- n est un nombre entier positif supérieur ou égal à 1 choisi pour que le composé (1) ait une masse moléculaire moyenne en nombre dans la gamme allant de 3000 à 50 000.

2. Polyéthers perfluorés selon la revendication 1, dans lesquels les chaînes de polyéthers perfluorés Rf, R'f préférées sont choisies parmi les structures suivantes :
(A) -O-(CF₂CF(CF₃)O)ₐ(CFXO)_{b}-CF₂(Ra_{f})CF₂-O-(CF₂CF(CF₃)O)ₐ (CFXO)_{b}-
dans laquelle X est F ou CF₃ ; a et b sont des nombres entiers de telle sorte que la masse moléculaire moyenne en nombre soit dans la gamme ci-dessus ; a/b se trouve entre 10 et 100, b étant différent de 0 ; Ra_{f} est un groupe fluoroalkylène ayant 1 à 4 atomes de carbone ;
(B) -O-(CF₂CF₂O)_{c}(CF₂O)_{d}(CF₂(CF₂)_{z'} O)ₕ-
dans laquelle c, d et h sont des nombres entiers de telle sorte que la masse moléculaire moyenne en nombre soit dans la gamme ci-dessus ; c/d se trouve entre 0,1 et 10, d étant différent de 0 ; h/(c+d) se trouve entre 0 et 0,05, (c+d) étant différent de 0 ; z' vaut 2 ou 3 ; h peut également être égal à 0 ;
(C) -O-(C₃F₆O)ₑ(CF₂CF₂O)_{f} (CFXO)_{g}-
dans laquelle X est F ou CF₃ ; e, f, g sont des nombres entiers de telle sorte que la masse moléculaire moyenne en nombre se trouve dans la gamme ci-dessus ; e/(f+g) se trouve entre 0,1 et 10, (f+g) étant différent de 0 ; f/g se trouve entre 2 et 10, g étant différent de 0 ; (C₃F₆O) peut représenter des unités de formule -(CF₂CF(CF₃)O) ou -(CF (CF₃)CF₂O)- ;
(D) -O-(CF₂(CF₂)_{z'}O)ₛ-
dans laquelle s est un nombre entier de telle sorte que la masse moléculaire ci-dessus soit obtenue ; z' a la signification déjà définie ;
(E) -O-(CR₄R₅CF₂CF₂O)_{j'}- ou -(CR₄R₅CF₂CF₂O)_{p'}-Ra_{f}-O-(CR₄R₅CF₂CF₂O)_{q'}-
dans laquelle R₄ et R₅ sont identiques ou différents l'un de l'autre et choisis parmi H, Cl ou un groupe perfluoroalkyle ayant 1 à 4 atomes de carbone ; Ra_{f} est un groupe fluoroalkylène ayant 1 à 4 atomes de carbone ; j', p' et q' sont des nombres entiers de telle sorte que la masse moléculaire ci-dessus soit obtenue ;
(F) -O-(CF(CF₃)CF₂O)_{j"}-Ra'_{f}-O-(CF(CF₃)CF₂O)_{j"}-
j" étant un nombre entier de telle sorte que la masse moléculaire ci-dessus soit obtenue ; Ra'_{f} est un groupe fluoroalkylène ayant 1 à 4 atomes de carbone.

3. Polyéthers (per)fluorés selon la revendication 2, dans lesquels les chaînes de polyéthers perfluorés Rf, R'f sont choisies entre les structures (A) et (B).

4. Utilisation des polyéthers (per)fluorés selon les revendications 1 à 3 comme lubrifiants, de préférence en présence d'acides de Lewis.

5. Compositions lubrifiantes comprenant les huiles de formule (1) selon les revendications 1 à 3 et des additifs antirouille et/ou des additifs antioxydants et/ou des additifs anti-usure.

6. Graisses lubrifiantes comprenant une huile de polyéther perfluoré selon les revendications 1 à 3 et un épaississant, de préférence choisi parmi le PTFE, le téréphtalamate de sodium, le savon de calcium ou de lithium, une polyrésine.

7. Graisses lubrifiantes selon la revendication 6 comprenant des dispersants, de préférence des agents tensioactifs, de manière davantage préférée des agents tensioactifs non ioniques ayant une structure de polyéther perfluoré ou de perfluoroalkyle ; du talc et/ou des charges inorganiques ; des additifs anti-rouille et/ou des additifs antioxydants et/ou des additifs anti-usure.

8. Procédé de préparation des polyéthers (per)fluorés de la formule (1) selon les revendications 1 à 3 comprenant :
(I) la réaction d'un dithiol de polyéther (per)fluoré de formule :
HS-Y-R'f-Y'-SH (2)
avec un diester de polyéther (per)fluoré sulfonique de formule
RS(O)₂O-Y-Rf-Y'-OS(O)₂R (3)
dans lesquelles :
- Rf, Rf', Y et Y' ont la même définition que dans la revendication 1,
- R est une chaîne de perfluoroalkyle dont le nombre d'atomes de carbone se trouve entre 1 et 4, est de préférence de 4, ou est un groupe -CH₃, -Ph-CH₃, -Ph-NO₂.
selon un rapport molaire dithiol (2)/diester sulfonique (3) entre 0,5 et 4, de préférence entre 1 et 2, en présence d'une base, dissoute dans un solvant, dans laquelle le rapport équivalent dithiol/base se trouve entre 0,5 et 2, de préférence entre 1 et 2, à une température dans la gamme allant de 30 °C à 120 °C, de préférence de 70 °C à 100 °C, facultativement en présence d'un solvant organique fluoré.
(II) les sels précipités de la masse réactionnelle obtenue dans l'étape (I) sont séparés et la phase organique est neutralisée, par exemple avec des acides aqueux dilués, et facultativement les sels organiques résiduels sont éliminés, par exemple par lavages répétés à l'eau, puis le solvant, si présent, est éliminé du produit obtenu.

9. Procédé selon la revendication 8, dans lequel la base est une base inorganique, de préférence KOH, ou une base organique, de préférence des amines tertiaires aliphatiques, alicycliques et aromatiques, de manière davantage préférée une triéthylamine.

10. Procédé selon la revendication 9, dans lequel une solution alcoolique de KOH est utilisée comme base à une concentration entre 5 % et 30 % (m/m), de préférence entre 10 % et 20 % (m/m).

11. Procédé selon les revendications 8 à 10, dans lequel le solvant organique fluoré est choisi parmi des solvants perfluorés, hydroperfluorés, ou leurs mélanges, ayant un point d'ébullition dans la gamme allant de 30 °C à 150 °C, de préférence de 70 °C à 100 °C, par exemple Galden® D100 (mélange 1/1 en poids de tétrahydropyranne de propyle perfluoré et de tétrahydrofuranne de butyle perfluoré).

12. Procédé selon les revendications 8 à 11, dans lequel le rapport en poids solvant/dithiol fluoré se trouve entre 0,5 et 4, de préférence entre 1 et 2.

13. Procédé selon les revendications 8 à 12, dans lequel les durées de réaction se trouvent entre 8 et 24 heures.

14. Procédé de préparation des dithiols de polyéthers (per)fluorés de formule :
HS-Y-R'f-Y'-SH (2)
dans laquelle Rf, R'f, Y et Y' ont la même définition que dans la revendication 1, comprenant les étapes suivantes :
(A1) réaction d'un diol de polyéther (per)fluoré ayant la formule :
HO-Y-R'f-Y'-OH (4)
dans laquelle R'f, Y et Y' sont comme ci-dessus,
avec un halogénure de sulphonyle de formule :
RS(O)₂W (6)
dans laquelle W = halogène, de préférence F ;
R est une chaîne de perfluoroalkyle ayant un nombre d'atomes de carbone se trouvant entre 1 et 4, étant de préférence de 4, ou un groupe -CH₃, -Ph-CH₃, -Ph-NO₂ (Ph étant phényle),
selon un rapport équivalent diol (4)/halogénure de sulphonyle (6) se trouvant entre 1/1 et 1/1,5, étant de préférence de 1/1, en présence d'une base avec un rapport équivalent base/halogénure de sulphonyle entre 1/1 et 1/1,5, de préférence 1,1/1, à une température entre -20°C et 10 °C, de préférence entre -10 °C et 0 °C, de ce fait obtenant un diester de polyéther (per)fluoré sulphonique de formule :
RS(O)₂O-Y-Rf-Y'-OS(O)₂R (3)
dans laquelle
R, Rf, R'f, Y et Y' ont la signification ci-dessus ;
(B1) réaction du composé de formule (3) avec le thiolacétate d'un métal alcalin M ayant la formule CH₃C(O)SM, de préférence M = potassium, selon un rapport équivalent diester sulphonique (3)/thiolacétate entre 1/1 et 1/1,2, de préférence 1/1,1, en présence d'un mélange à 1/1 v/v d'un solvant organique fluoré et d'un alcool aliphatique ayant un point d'ébullition supérieur à 50 °C, de préférence l'éthanol, avec un rapport en poids entre le mélange de solvants et le diester sulphonique (3) entre 0,5 et 4, de préférence entre 1 et 2, sous une atmosphère inerte, à une température dans la gamme allant de 30 °C à 80 °C, de préférence de 50 °C à 70 °C, de ce fait obtenant un diester de polyéther (per)fluoré thiolacétique de formule :
CH₃C(O)-S-Y-R'f-Y'-S-C(O)CH₂ (5)
dans laquelle R'f, Y et Y' ont la signification ci-dessus;
(C1) mise en réaction du mélange obtenu dans l'étape (B1) avec du HCl anhydre avec un rapport équivalent diester thiolacétique (5)/HCl entre 1/1 et 1/10, de préférence entre 1/5 et 1/7, à une température dans la gamme allant de 50 °C à 100 °C, de préférence de 80 °C à 100 °C, de ce fait obtenant le dithiol de polyéther (per)fluoré de formule (2).

15. Procédé selon la revendication 14, dans lequel dans l'étape (A1) des amines tertiaires aliphatiques, alicycliques ou aromatiques, de préférence la triéthylamine (TEA), sont de préférence utilisées comme bases.

16. Procédé selon les revendications 14 à 15, dans lequel les durées de réaction dans l'étape (A1) se trouvent généralement entre 8 et 16 heures.

17. Procédé selon les revendications 14 à 16, dans lequel, à la fin de l'étape (A1), le composé de formule (3) est séparé, par exemple, d'abord par dilution de la masse réactionnelle avec un solvant organique fluoré, par exemple Galden® D100, puis par lavages répétés avec un alcool, par exemple le méthanol, obtenant deux phases, une phase alcoolique riche en sels d'ammonium et une phase organique de laquelle le diester de polyéther perfluoré sulphonique de formule (3) est isolé par évaporation du solvant organique.

18. Procédé selon les revendications 14 à 17, dans lequel dans l'étape (B1) le solvant organique fluoré peut être aliphatique ou aromatique, de préférence aromatique ; en variante le solvant est choisi parmi des solvants perfluorés ou hydrofluorés.

19. Procédé selon les revendications 14 à 18, dans lequel les durées de réaction dans l'étape (B1) se trouvent généralement entre 8 et 16 heures.

20. Procédé selon les revendications 14 à 19, dans lequel, à la fin de l'étape (B1) les sels organiques précipités sont séparés, par exemple par filtration, et la masse réactionnelle est lavée de façon répétée à l'eau. La phase organique contenant le composé de formule (5) est séparée de la phase aqueuse, puis le composé (5) est isolé par évaporation du solvant.

21. Procédé selon les revendications 14 à 20, dans lequel les durées de réaction dans l'étape (C1) se trouvent entre 8 et 10 heures.

22. Procédé selon les revendications 14 à 21, dans lequel le mélange réactionnel obtenu dans (C1) est lavé de façon répétée à l'eau avec formation de deux phases. Le composé (2) est alors isolé de la phase organique par évaporation des solvants.

23. Procédé selon les revendications 8 à 14 comprenant la préparation selon les revendications 14 à 22 des dithiols de polyéther (per)fluorés de formule (2).

24. Utilisation des polyéthers perfluorés des revendications 1 à 3 pour conférer à des surfaces métalliques une résistance à la corrosion.

25. Utilisation des polyéthers perfluorés des revendications 1 à 3 comme additifs anti-corrosion pour des huiles fluorées, de préférence des huiles de polyéther perfluoré, en quantités allant de 0,05 % jusqu'à 10 %, de préférence jusqu'à 5 %, de manière davantage préférée jusqu'à 3%.
